# EUROPEAN PATENT APPLICATION

(11) **EP 4 224 583 A1**
(43) Date of publication of application: **09.08.2023**
(21) Application number: 21889338.6
(22) Date of filing: 24.06.2021
(51) Int. Cl.: H01M 8/04119, B01D 63/02

(54) **CARTRIDGE OF HUMIDIFIER FOR FUEL CELL AND HUMIDIFIER FOR FUEL CELL**

(30) Priority: 04.11.2020 KR 20200146208
(71) Applicant: Kolon Industries, Inc., Seoul 07793 (KR)
(72) Inventor: KIM, In Ho, Seoul 07793 (KR); KIM, Do Woo, Seoul 07793 (KR); AN, Na Hyeon, Seoul 07793 (KR)
(74) Representative: Ter Meer Steinmeister & Partner
(86) International application number: PCT/KR2021/007937
(87) International publication number: WO 2022/097870

(57) **Abstract**

The present invention relates to a cartridge of a humidifier for a fuel cell for humidifying dry gas supplied from the outside by using wet gas discharged from a fuel cell stack, and to a humidifier for a fuel cell, the cartridge of a humidifier for a fuel cell comprising: an inner case having an opening at the end thereof and including a plurality of hollow fiber membranes; and a first gas inlet and a first gas outlet formed in the inner case.

## Description

### [TECHNICAL FIELD]

The present disclosure relates to a humidifier for fuel cells configured to supply humidified gas to a fuel cell.

### [Background Art]

A fuel cell has advantages in that it is possible to continuously generate electricity as long as hydrogen and oxygen are supplied, unlike a general chemical cell, such as a dry cell or a storage cell, and in that there is no heat loss, whereby efficiency of the fuel cell is about twice as high as efficiency of an internal combustion engine.

In addition, the fuel cell directly converts chemical energy generated by combination of hydrogen and oxygen into electrical energy, whereby the amount of contaminants that are discharged is small. Consequently, the fuel cell has advantages in that the fuel cell is environmentally friendly and in that a concern about depletion of resources due to an increase in energy consumption can be reduced.

Based on the kind of an electrolyte that is used, such a fuel cell may generally be classified as a polymer electrolyte membrane fuel cell (PEMFC), a phosphoric acid fuel cell (PAFC), a molten carbonate fuel cell (MCFC), a solid oxide fuel cell (SOFC), or an alkaline fuel cell (AFC).

These fuel cells are operated fundamentally by the same principle, but are different from each other in terms of the kind of fuel that is used, operating temperature, catalyst, and electrolyte. Among these fuel cells, the polymer electrolyte membrane fuel cell (PEMFC) is known as being the most favorable to a transportation system as well as small-scale stationary power generation equipment, since the polymer electrolyte membrane fuel cell is operated at a lower temperature than the other fuel cells and the output density of the polymer electrolyte membrane fuel cell is high, whereby it is possible to miniaturize the polymer electrolyte membrane fuel cell.

One of the most important factors in improving the performance of the polymer electrolyte membrane fuel cell (PEMFC) is to supply a predetermined amount or more of moisture to a polymer electrolyte membrane or a proton exchange membrane (PEM) of a membrane electrode assembly (MEA) in order to retain moisture content. The reason for this is that, if the polymer electrolyte membrane or the proton exchange membrane is dried, power generation efficiency is abruptly reduced.

1) A bubbler humidification method of filling a pressure-resistant container with water and allowing a target gas to pass through a diffuser in order to supply moisture, 2) a direct injection method of calculating the amount of moisture to be supplied that is necessary for fuel cell reaction and directly supplying moisture to a gas stream pipe through a solenoid valve, and 3) a membrane humidification method of supplying moisture to a gas fluid bed using a polymer separation membrane are used as methods of humidifying the polymer electrolyte membrane or the proton exchange membrane.

Among these methods, the membrane humidification method, which provides water vapor to air that is supplied to the polymer electrolyte membrane or the proton exchange membrane using a membrane configured to selectively transmit only water vapor included in off-gas in order to humidify the polymer electrolyte membrane or the proton exchange membrane, is advantageous in that it is possible to reduce the weight and size of a humidifier.

When a module is formed, a hollow fiber membrane having large transmission area per unit volume is suitable for a permselective membrane used in the membrane humidification method. That is, when a humidifier is manufactured using a hollow fiber membrane, high integration of the hollow fiber membrane having large contact surface area is possible, whereby it is possible to sufficiently humidify the fuel cell even at a small capacity, it is possible to use a low-priced material, and it is possible to collect moisture and heat included in off-gas discharged from the fuel cell at a high temperature and to reuse the collected moisture and heat through the humidifier.

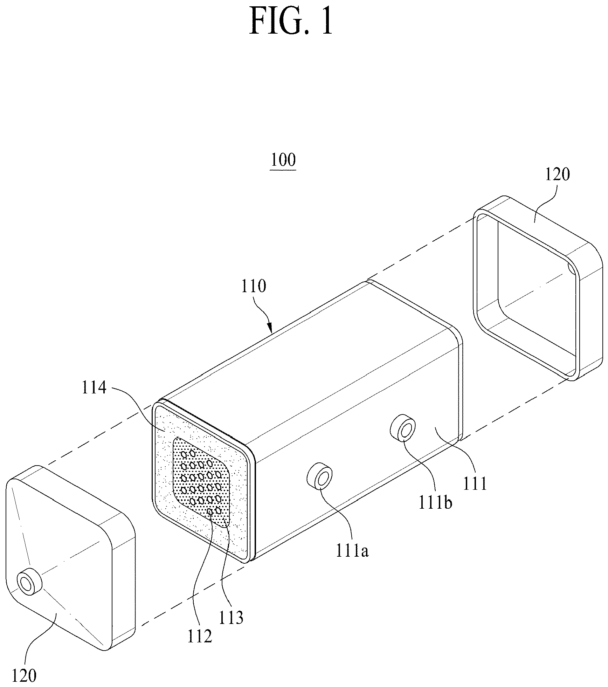

FIG. 1 is a schematic exploded perspective view of a conventional humidifier for fuel cells.

As illustrated in FIG. 1, a conventional membrane humidification type humidifier 100 includes a humidifying module 110, in which moisture exchange is performed between air supplied from the outside and off-gas discharged from a fuel cell stack (not shown), and caps 120 coupled respectively to opposite ends of the humidifying module 110.

One of the caps 120 transmits air supplied from the outside to the humidifying module 110, and the other cap transmits air humidified by the humidifying module 110 to the fuel cell stack.

The humidifying module 110 includes a mid-case 111 having an off-gas inlet 111a and an off-gas outlet 111b and a plurality of hollow fiber membranes 112 in the mid-case 111. Opposite ends of a bundle of hollow fiber membranes 112 are potted in fixing layers 113. In general, each of the fixing layers 113 is formed by hardening a liquid polymer, such as liquid polyurethane resin, using a casting method. The fixing layers 113, in which ends of the hollow fiber membranes 112 are potted, and resin layers 114 provided between the fixing layers 113 and the mid-case 111 isolate inner spaces of the caps 120 from an inner space of the mid-case 111. Similarly to the fixing layers 113, each of the resin layers 114 is generally formed by hardening a liquid polymer, such as liquid polyurethane resin, using a casting method.

Air supplied from the outside flows along hollows of the hollow fiber membranes 112. Off-gas introduced into the mid-case 111 through the off-gas inlet 111a comes into contact with outer surfaces of the hollow fiber membranes 112, and is discharged from the mid-case 111 through the off-gas outlet 111b. When the off-gas comes into contact with the outer surfaces of the hollow fiber membranes 112, moisture contained in the off-gas is transmitted through the hollow fiber membranes 112 to humidify air flowing along the hollows of the hollow fiber membranes 112.

In recent years, fuel cells have been used in various places of use, whereby it is also required for a humidifier for fuel cells to have variable humidification performance. Consequently, there is an urgent need to develop a humidifier for fuel cells capable of having variable humidification performance required for the fuel cells.

### [Disclosure]

### [Technical Problem]

The present disclosure has been made in view of the above problems, and it is an object of the present disclosure to provide a cartridge of a humidifier for fuel cells and a humidifier for fuel cells capable of having variable humidification performance required for the fuel cells.

### [Technical Solution]

In order to accomplish the above object, the present disclosure may include the following constructions.

A humidifier for fuel cells according to the present disclosure may include a humidifying module configured to humidify dry gas supplied from the outside using wet gas discharged from a fuel cell stack, a first cap coupled to one end of the humidifying module, and a second cap coupled to the other end of the humidifying module. The humidifying module may include a mid-case open at opposite ends thereof and at least one cartridge disposed in the mid-case, the cartridge including a plurality of hollow fiber membranes. The cartridge may include an inner case having openings formed in ends thereof, the inner case being configured to receive the plurality of hollow fiber membranes. The inner case may include a first gas inlet configured to allow gas to be introduced therethrough and a first gas outlet configured to allow gas to be discharged therethrough.

In the humidifier for fuel cells according to the present disclosure, the area of the first gas inlet and the area of the first gas outlet may be different from each other.

In the humidifier for fuel cells according to the present disclosure, the inner case may include an introduction member, in which the first gas inlet is formed, a discharge member, in which the first gas outlet is formed, and a connection member disposed between the introduction member and the discharge member. One end of the connection member may be coupled to one end of the introduction member, and the other end of the connection member may be coupled to one end of the discharge member. The first gas inlet may be disposed at a position at which the distance from one end of the introduction member and the distance from the other end of the introduction member are different from each other. The first gas outlet may be disposed at a position at which the distance from one end of the discharge member and the distance from the other end of the introduction member are different from each other.

A cartridge of a humidifier for fuel cells according to the present disclosure may be a cartridge of a humidifier for fuel cells configured to humidify dry gas supplied from the outside using wet gas discharged from a fuel cell stack, the cartridge including an inner case having openings formed in ends thereof, the inner case being configured to receive a plurality of hollow fiber membranes, and a first gas inlet and a first gas outlet formed in the inner case.

In the cartridge of the humidifier for fuel cells according to the present disclosure, the area of the first gas inlet and the area of the first gas outlet may be different from each other.

In the cartridge of the humidifier for fuel cells according to the present disclosure, the inner case may include an introduction member, in which the first gas inlet is formed, a discharge member, in which the first gas outlet is formed, and a connection member coupled to each of the introduction member and the discharge member. One end of the connection member may be coupled to one end of the introduction member, and the other end of the connection member may be coupled to one end of the discharge member. The first gas inlet may be disposed at a position at which the distance from one end of the introduction member and the distance from the other end of the introduction member are different from each other. The first gas outlet may be disposed at a position at which the distance from one end of the discharge member and the distance from the other end of the discharge member are different from each other.

### [Advantageous Effects]

According to the present disclosure, it is possible to achieve the following effect.

The present disclosure is implemented so as to have variable humidification performance depending on dwell time during which gas stays in an inner case. Consequently, it is possible to improve versatility, whereby the present disclosure is applicable to fuel cells used in various places of use.

### [Description of Drawings]

FIG. 1 is a schematic exploded perspective view of a conventional humidifier for fuel cells.
FIG. 2 is a schematic exploded perspective view of a humidifier for fuel cells according to the present disclosure.
FIG. 3 is a schematic exploded sectional view showing the humidifier for fuel cells according to the present disclosure, taken along line I-I of FIG. 2.
FIG. 4 is a schematic coupled sectional view showing the humidifier for fuel cells according to the present disclosure, taken along line I-I of FIG. 2.
FIGs. 5 and 6 are schematic plan views of a cartridge of a humidifier for fuel cells according to the present disclosure.
FIGs. 7 and 8 are schematic side sectional views showing the cartridge of the humidifier for fuel cells according to the present disclosure, taken along line II-II of FIG. 5.
FIGs. 9 to 14 are schematic plan views illustrating embodiments of the cartridge of the humidifier for fuel cells according to the present disclosure.

### [Best Mode]

Hereinafter, an embodiment of a humidifier for fuel cells according to the present disclosure will be described in detail with reference to the accompanying drawings. A cartridge of a humidifier for fuel cells according to the present disclosure may be included in a humidifier for fuel cells according to the present disclosure, and therefore the cartridge of the humidifier for fuel cells according to the present disclosure will also be described while the humidifier for fuel cells according to the present disclosure is described.

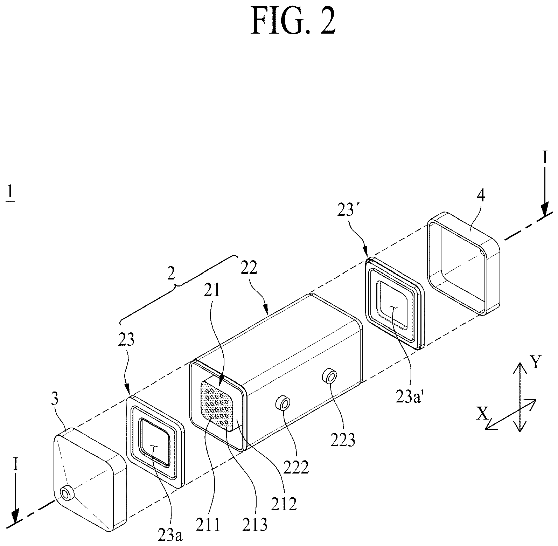

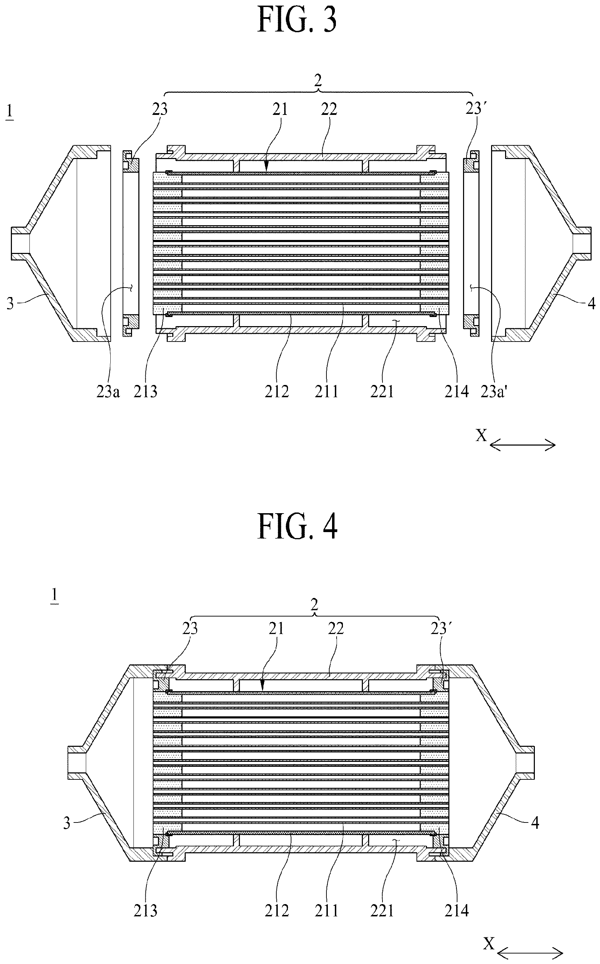

Referring to FIGs. 2 to 4, a humidifier 1 for fuel cells according to the present disclosure is configured to humidify dry gas supplied from the outside using wet gas discharged from a fuel cell stack (not shown). The dry gas may be fuel gas or air. The dry gas may be humidified by the wet gas and may then be supplied to the fuel cell stack. The humidifier 1 for fuel cells according to the present disclosure includes a humidifying module 2 configured to humidify dry gas, a first cap 3 coupled to one end of the humidifying module 2, and a second cap 4 coupled to the other end of the humidifying module 2.

Referring to FIGs. 2 to 5, the humidifying module 2 humidifies dry gas supplied from the outside. The first cap 3 may be coupled to one end of the humidifying module 2. The second cap 4 may be coupled to the other end of the humidifying module 2. The first cap 3 may transmit dry gas to the humidifying module 2. In this case, the second cap 4 may transmit dry gas humidified by wet gas in the humidifying module 2 to the fuel cell stack. The first cap 3 may transmit wet gas to the humidifying module 2. In this case, the second cap 4 may discharge wet gas to the outside after dry gas is humidified in the humidifying module 2.

The humidifying module 2 includes at least one cartridge 21 and a mid-case 22.

The cartridge 21 is disposed in the mid-case 22, and includes a plurality of hollow fiber membranes 211. The hollow fiber membranes 211 may be coupled to the cartridge 21 so as to be modularized. Consequently, the hollow fiber membranes 211 may be installed in the mid-case 22 through a process of coupling the cartridge 21 to the mid-case 22. In the humidifier 1 for fuel cells according to the present disclosure, therefore, ease in installation, separation, and replacement of the hollow fiber membranes 211 may be improved. The cartridge 21 may be implemented as a cartridge of a humidifier for fuel cells according to the present disclosure.

The cartridge 21 may include an inner case 212.

The inner case 212 has openings formed in ends thereof, and the plurality of hollow fiber membranes 211 is received in the inner case. The hollow fiber membranes 211 may be disposed in the inner case 212 so as to be modularized. The hollow fiber membranes 211 may include a polymer membrane made of polysulfone resin, polyethersulfone resin, sulfonated polysulfone resin, polyvinylidene fluoride (PVDF) resin, polyacrylonitrile (PAN) resin, polyimide resin, polyamide imide resin, polyester imide resin, or a mixture of two or more thereof.

The cartridge 21 may include fixing layers 213 and 214.

Ends of the plurality of hollow fiber membranes 211 are potted in the fixing layers 213 and 214, which close the openings of the inner case 212. One side of the plurality of hollow fiber membranes 211 may be fixed by the fixing layer 213, and the other side of the plurality of hollow fiber membranes 211 may be fixed by the fixing layer 214. Each of the fixing layers 213 and 214 may be formed by hardening a liquid resin, such as liquid polyurethane resin, through a casting process. The fixing layers 213 and 214 may fix the ends of the plurality of hollow fiber membranes 211 to the inner case 212.

The fixing layers 213 and 214 may be formed so as not to block the hollows of the plurality of hollow fiber membranes 211. Consequently, dry gas or wet gas supplied from the outside may be supplied to the hollows of the hollow fiber membranes 211 without being disturbed by the fixing layers 213 and 214, and may be discharged from the hollows of the hollow fiber membranes 211 without being disturbed by the fixing layers 213 and 214.

The cartridge 21 may include a first gas inlet 215 and a first gas outlet 216.

The first gas inlet 215 is formed in the inner case 212. The first gas inlet 215 may allow wet gas or dry gas to be introduced into the inner case 212 therethrough. The first gas inlet 215 may be formed through the inner case 212.

The first gas outlet 216 is formed in the inner case 212. The first gas outlet 216 may allow wet gas or dry gas to be discharged from the inner case 212 therethrough. The first gas outlet 216 may be formed through the inner case 212.

The cartridge 21 is coupled to the mid-case 22. The cartridge 21 may be disposed in the mid-case 22. Opposite ends of the mid-case 22 are open. In this case, a receiving hole 221 may be formed in the mid-case 22. The receiving hole 221 may be formed so as to extend through the mid-case 22 in a first axis direction (X-axis direction).

A second gas inlet 222 and a second gas outlet 223 may be formed at one side of the mid-case 22.

The second gas inlet 222 may allow wet gas or dry gas to be introduced into the mid-case 22 therethrough. The second gas outlet 223 may allow wet gas or dry gas to be discharged from the mid-case 22 therethrough. The second gas inlet 222 and the second gas outlet 223 may be disposed spaced apart from each other in the first axis direction (X-axis direction). The second gas inlet 222, the second gas outlet 223, and the mid-case 22 may be integrally formed.

When wet gas flows through the second gas inlet 222 and the second gas outlet 223, the wet gas may be supplied to a space between an inner surface of the mid-case 22 and an outer surface of the inner case 212 through the second gas inlet 222, may be supplied into the inner case 212 through the first gas inlet 215, and may come into contact with the outer surfaces of the hollow fiber membranes 211. During this process, moisture contained in the wet gas may be transmitted through the hollow fiber membranes 211 to humidify dry gas flowing along the hollows of the hollow fiber membranes 211. The humidified dry gas may be discharged from the hollow fiber membranes 211, and may then be supplied to the fuel cell stack through the second cap 4. After humidifying the dry gas, the wet gas may be discharged to the space between the outer surface of the inner case 212 and the inner surface of the mid-case 22 through the first gas outlet 216, and may be discharged from the mid-case 22 through the second gas outlet 223. The second gas inlet 222 may be connected to the fuel cell stack such that wet gas is supplied thereto. In this case, the wet gas may be off-gas discharged from the fuel cell stack.

When dry gas flows through the second gas inlet 222 and the second gas outlet 223, the dry gas may be supplied to the space between the inner surface of the mid-case 22 and the outer surface of the inner case 212 through the second gas inlet 222, may be supplied into the inner case 212 through the first gas inlet 215, and may come into contact with the outer surface of the hollow fiber membranes 211. During this process, moisture in wet gas flowing along the hollows of the hollow fiber membranes 211 may be transmitted through the hollow fiber membranes 211 to humidify the dry gas introduced into the inner case 212. The humidified dry gas may be discharged to the space between the outer surface of the inner case 212 and the inner surface of the mid-case 22 through the first gas outlet 216, may be discharged from the mid-case 22 through the second gas outlet 223, and may be supplied to the fuel cell stack. After humidifying the dry gas, the wet gas may be discharged from the hollow fiber membranes 211, and may then be discharged to the outside through the second cap 4. In this case, the wet gas may be off-gas discharged from the fuel cell stack.

The humidifying module 2 may include a plurality of packing members 23 and 23'.

The packing members 23 and 23' form a hermetic seal between the cartridge 21 and the mid-case 22 in order to prevent direct mixing between dry gas and wet gas. The packing members 23 and 23' may be inserted between the cartridge 21 and the mid-case 22. In this case, the cartridge 21 may be inserted through first through-holes 23a and 23a' formed respectively in the packing members 23 and 23'. The packing members 23 and 23' may be disposed respectively at opposite sides of the cartridge 21. Although not shown, resin layers may be formed respectively at the opposite sides of the cartridge 21 instead of the packing members 23 and 23'. Each of the resin layers may be formed by hardening a liquid polymer, such as liquid polyurethane resin, using a casting method.

Referring to FIGs. 2 to 4, the first cap 3 is coupled to one end of the humidifying module 2. A space between the first cap 3 and the cartridge 21 may be isolated from a space between the cartridge 21 and the mid-case 22 in a hermetically sealed state by the packing member 23 or the resin layer.

Referring to FIGs. 2 to 4, the second cap 4 is coupled to the other end of the humidifying module 2. The second cap 4 may be coupled to the other end of the humidifying module 2 so as to be spaced apart from the first cap 3 in the first axis direction (X-axis direction). A space between the second cap 4 and the cartridge 21 may be isolated from the space between the cartridge 21 and the mid-case 22 in a hermetically sealed state by the packing member 23' or the resin layer.

Here, the humidifier 1 for fuel cells according to the present disclosure may be implemented as follows so as to have variable humidification performance through the cartridge 21.

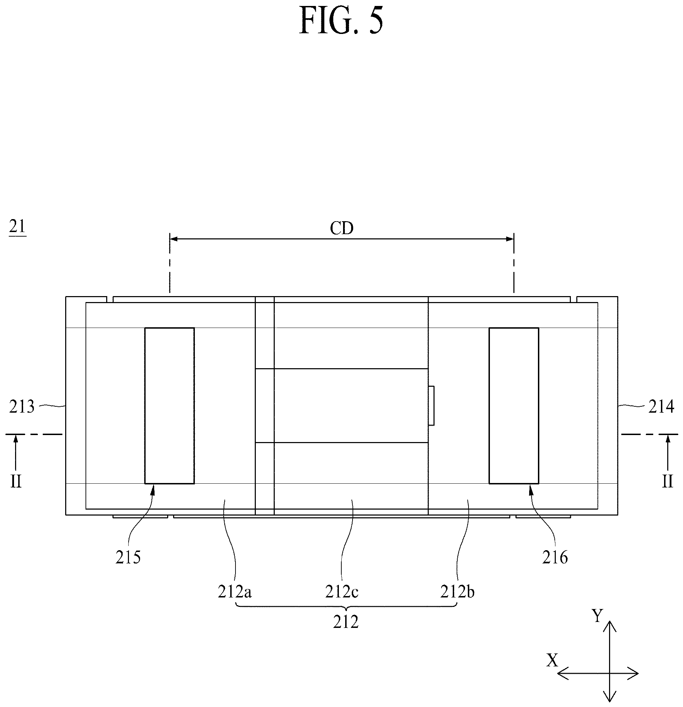

Referring to FIGs. 5 to 7, the first gas inlet 215 and the first gas outlet 216 of the cartridge 21 may be implemented as follows.

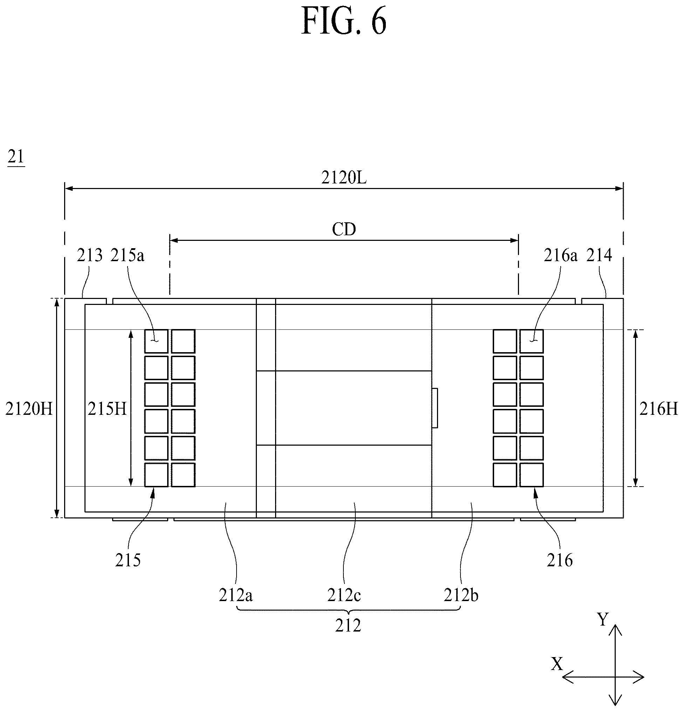

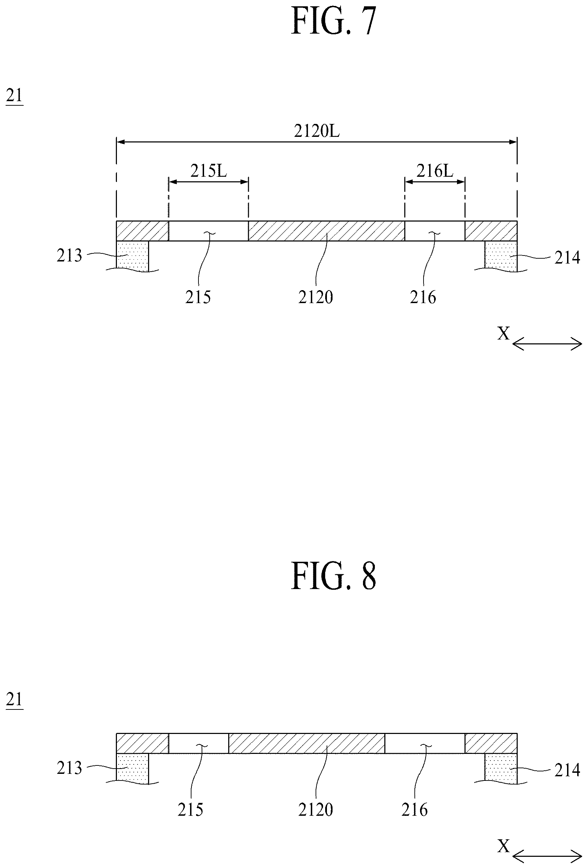

The first gas inlet 215 may be formed at one side 2120 of the inner case 212. Based on FIG. 7, one side 2120 of the inner case 212 may be an upper surface. The first gas inlet 215 may allow wet gas or dry gas to be introduced into the inner case 212 therethrough. As shown in FIGs. 5 and 7, the first gas inlet 215 may be implemented by one through-hole formed through the inner case 212. As shown in FIG. 6, the first gas inlet 215 may be implemented by a plurality of through-holes formed through the inner case 212. In this case, the first gas inlet 215 may include a plurality of windows 215a formed through different parts of the inner case 212. The windows 215a may be disposed spaced apart from each other in the first axis direction (X-axis direction) and a second axis direction (Y-axis direction) so as to form a matrix. The second axis direction (Y-axis direction) is an axial direction perpendicular to the first axis direction (X-axis direction).

The first gas outlet 216 may be formed at one side 2120 of the inner case 212. The first gas outlet 216 may allow wet gas or dry gas to be discharged from the inner case 212 therethrough. As shown in FIGs. 5 and 7, the first gas outlet 216 may be implemented by one through-hole formed through the inner case 212. As shown in FIG. 6, the first gas outlet 216 may be implemented by a plurality of through-holes formed through the inner case 212. In this case, the first gas outlet 216 may include a plurality of windows 216a formed through different parts of the inner case 212. The windows 216a may be disposed spaced apart from each other in the first axis direction (X-axis direction) and the second axis direction (Y-axis direction) so as to form a matrix.

Referring to FIGs. 7 to 10, the cartridge 21 may be formed such that the area of wet gas or dry gas that passes through the first gas inlet 215 (hereinafter referred to as the "inflow area") and the area of wet gas or dry gas that passes through the first gas outlet 216 (hereinafter referred to as the "outflow area") are different from each other. That is, the area of the first gas inlet 215 and the area of the first gas outlet 216 are different from each other.

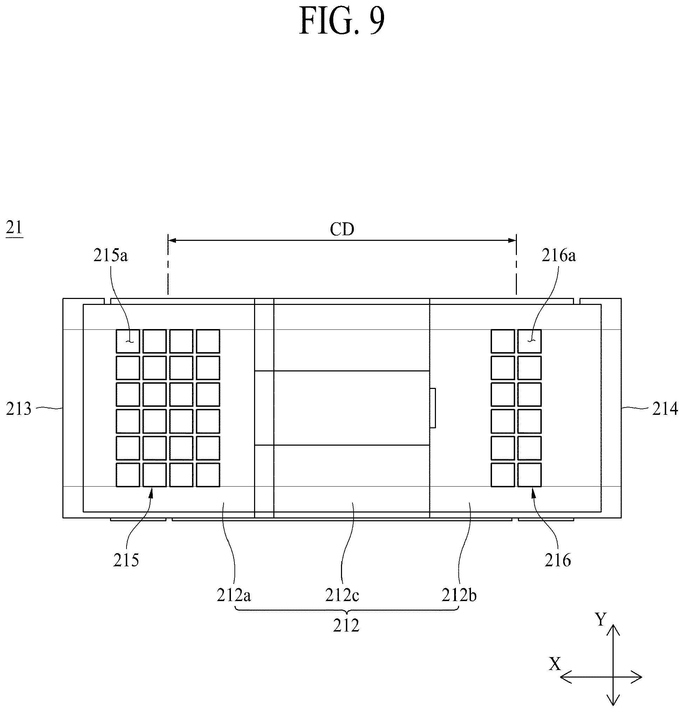

For example, when the inflow area is greater than the outflow area, as shown in FIGs. 7 and 9, the outflow rate per unit time of wet gas or dry gas discharged from the inner case 212 through the first gas outlet 216 may be less than the inflow rate per unit time of wet gas or dry gas introduced into the inner case 212 through the first gas inlet 215. As a result, dwell time during which wet gas or dry gas stays in the inner case 212 may be increased, whereby humidification performance of the cartridge 21 may be improved. Consequently, the humidifier 1 for fuel cells according to the present disclosure may be implemented so as to be suitable for a fuel cell used at a place of use that requires high humidification performance.

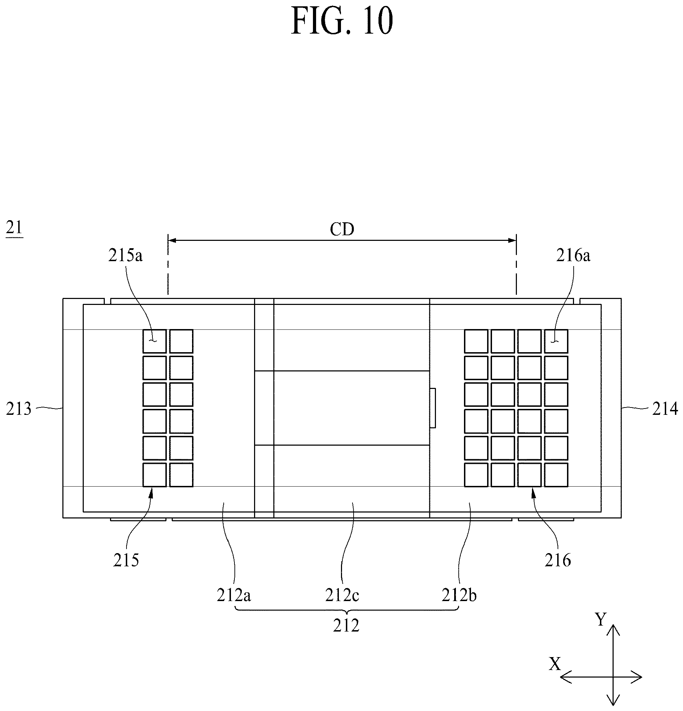

For example, when the inflow area is less than the outflow area, as shown in FIGs. 8 and 10, the outflow rate per unit time of wet gas or dry gas discharged from the inner case 212 through the first gas outlet 216 may be greater than the inflow rate per unit time of wet gas or dry gas introduced into the inner case 212 through the first gas inlet 215. As a result, dwell time during which wet gas or dry gas stays in the inner case 212 may be decreased, whereby humidification performance of the cartridge 21 may be adjusted so as to be suitable for humidification performance required at a place of use. Consequently, the humidifier 1 for fuel cells according to the present disclosure may be implemented so as to have humidification performance suitable for a fuel cell used at a place of use.

As described above, the cartridge 21 may be implemented so as to have variable humidification performance depending on dwell time of wet gas or dry gas using the difference between the inflow area and the outflow area. Consequently, it is possible to improve versatility, whereby the humidifier 1 according to the present disclosure is applicable to fuel cells used in various places of use. In addition, the humidifier 1 according to the present disclosure may be implemented such that the space between the cartridge 21 and the mid-case 22 is hermetically sealed by the packing members 23 and 23', whereby the cartridge 21 may be easily replaced, and therefore it is possible to improve responsiveness to humidification performance required by the fuel cell through replacement of the cartridge 21.

The inflow area may be the sectional area of the first gas inlet 215 based on a plane in which the first axis direction (X-axis direction) and the second axis direction (Y-axis direction) are disposed. When the first gas inlet 215 is implemented by one through-hole, as shown in FIGs. 7 and 8, the sectional area of the through-hole may be the inflow area. When the first gas inlet 215 is implemented so as to include the windows 215a, as shown in FIGs. 9 and 10, the sum of the sectional areas of the windows 215a may be the inflow area.

The outflow area may be the sectional area of the first gas outlet 216 based on the plane in which the first axis direction (X-axis direction) and the second axis direction (Y-axis direction) are disposed. When the first gas outlet 216 is implemented by one through-hole, as shown in FIGs. 7 and 8, the sectional area of the through-hole may be the outflow area. When the first gas outlet 216 is implemented so as to include the windows 216a, as shown in FIGs. 9 and 10, the sum of the sectional areas of the windows 216a may be the outflow area.

Referring to FIGs. 9 and 10, the number of the windows 215a provided in the first gas inlet 215 and the number of the windows 216a provided in the first gas outlet 216 may be different from each other. As a result, the cartridge 21 may be implanted such that the inflow area and the outflow area are different from each other, and therefore the cartridge may be implanted so as to have variable humidification performance depending on dwell time of wet gas or dry gas.

For example, when the number of the windows 215a provided in the first gas inlet 215 is greater than the number of the windows 216a provided in the first gas outlet 216, as shown in FIG. 9, the inflow area may be greater than the outflow area. As a result, dwell time during which wet gas or dry gas stays in the inner case 212 may be increased, whereby humidification performance of the cartridge 21 may be improved.

For example, when the number of the windows 216a provided in the first gas outlet 216 is greater than the number of the windows 215a provided in the first gas inlet 215, as shown in FIG. 10, the outflow area may be greater than the inflow area. As a result, dwell time during which wet gas or dry gas stays in the inner case 212 may be decreased, whereby humidification performance of the cartridge 21 may be adjusted so as to be suitable for humidification performance required at a place of use.

In this case, the areas of the windows 215a provided in the first gas inlet 215 may be equal to each other. As a result, the humidifier 1 for fuel cells according to the present disclosure may be implemented so as to have variable humidification performance using the number of the windows 215a provided in the first gas inlet 215. The areas of the windows 216a provided in the first gas outlet 216 may be equal to each other. As a result, the humidifier 1 for fuel cells according to the present disclosure may be implemented so as to have variable humidification performance using the number of the windows 216a provided in the first gas outlet 216.

Meanwhile, the areas of the windows 215a provided in the first gas inlet 215 and the areas of the windows 216a provided in the first gas outlet 216 may be equal to each other. As a result, the humidifier 1 for fuel cells according to the present disclosure may be implemented so as to have more variable humidification performance using the difference between the number of the windows 215a provided in the first gas inlet 215 and the number of the windows 216a provided in the first gas outlet 216. Also, in the humidifier 1 for fuel cells according to the present disclosure, a common tool may be used in order to form the windows 215a in the first gas inlet 215 and to form the windows 216a in the first gas outlet 216, whereby it is possible to improve ease of manufacturing the inner case 212 in which the first gas inlet 215 provided with the windows 215a and the first gas outlet 216 provided with the windows 216a are formed and to reduce process cost.

Here, on the assumption that the area of the first gas inlet 215 is N (N being a real number greater than 0), the area of the first gas outlet 216 may be 0.5N to less than 1N or greater than 1N to 2N. That is, the outflow area may be 0.5 times to less than 1 times the inflow area or may be greater than 1 to 2 times the inflow area. The inflow area may be derived by multiplying the length 215L (shown in FIG. 6) of the first gas inlet 215 in the first axis direction (X-axis direction) by the width 215H (shown in FIG. 6) of the first gas inlet 215 in the second axis direction (Y-axis direction). The outflow area may be derived by multiplying the length 216L (shown in FIG. 6) of the first gas outlet 216 in the first axis direction (X-axis direction) by the width 216H (shown in FIG. 6) of the first gas outlet 216 in the second axis direction (Y-axis direction).

When the inflow area is greater than the outflow area, the outflow area may be 0.5 times to less than 1 times the inflow area. In a comparative example in which the outflow area is less than 0.5 times the inflow area, the flow rate of wet gas or dry gas discharged from the inner case 212 may be remarkably decreased, whereby the pressure in the inner case 212 may be excessively increased. Unlike this, the embodiment may be implemented such that the outflow area is 0.5 or more times the inflow area, whereby the pressure in the inner case 212 may be appropriately adjusted.

When the outflow area is greater than the inflow area, the outflow area may be greater than 1 to 2 times the inflow area. In a comparative example in which the outflow area is greater than 2 times the inflow area, the flow rate of wet gas or dry gas discharged from the inner case 212 may be excessively increased, whereby dwell time during which wet gas or dry gas stays in the inner case 212 may be remarkably decreased. Unlike this, the embodiment may be implemented such that the outflow area is 2 times or less the inflow area, whereby dwell time during which wet gas or dry gas stays in the inner case 212 may be appropriately adjusted.

Here, on the assumption that the area of one side 2120 of the inner case 212 is M (M being a real number greater than 0), the area of the first gas inlet 215 may be 0.05M to 0.18M. That is, the inflow area may be 0.05 times to 0.18 times the area of one side 2120 of the inner case 212 (hereinafter referred to as the "one side area"). Based on FIG. 7, the one side area may be the area of an upper surface of the inner case 212. For example, the one side area may be derived by multiplying the length 2120L (shown in FIG. 6) of one side 2120 of the inner case 212 in the first axis direction (X-axis direction) by the width 2120H (shown in FIG. 6) of one side 2120 of the inner case 212 in the second axis direction (Y-axis direction).

In a comparative example in which the inflow area is less than 0.05 times the one side area, the flow rate of wet gas or dry gas introduced into the inner case 212 may be remarkably decreased, whereby humidification performance may be remarkably deteriorated. In a comparative example in which the inflow area is greater than 0.18 times the one side area, the flow rate of wet gas or dry gas introduced into the inner case 212 may be excessively increased, whereby the pressure in the inner case 212 may be excessively increased. Unlike this, the embodiment may be implemented such that the inflow area is 0.05 times to 0.18 times the one side area, whereby the flow rate of wet gas or dry gas introduced into the inner case 212 may be appropriately adjusted. When the relationship between the inflow area and the one side area is expressed as the ratio in area, the ratio of the inflow area to the one side area may be 1:20 to 9:50.

Here, on the assumption that the area of one side 2120 of the inner case 212 is M, the area of the first gas outlet 216 may be 0.05M to 0.18M. That is, the outflow area may be 0.05 times to 0.18 times the one side area.

In a comparative example in which the outflow area is less than 0.05 times the one side area, the flow rate of wet gas or dry gas discharged from the inner case 212 may be remarkably decreased, whereby the pressure in the inner case 212 may be excessively increased. In a comparative example in which the outflow area is greater than 0.18 times the one side area, the flow rate of wet gas or dry gas discharged from the inner case 212 may be excessively increased, whereby dwell time during which wet gas or dry gas stays in the inner case 212 may be remarkably decreased. Unlike this, the embodiment may be implemented such that the outflow area is 0.05 times to 0.18 times the one side area, whereby the flow rate of wet gas or dry gas discharged from the inner case 212 may be appropriately adjusted. When the relationship between the outflow area and the one side area is expressed as the ratio in area, the ratio of the outflow area to the one side area may be 1:20 to 9:50.

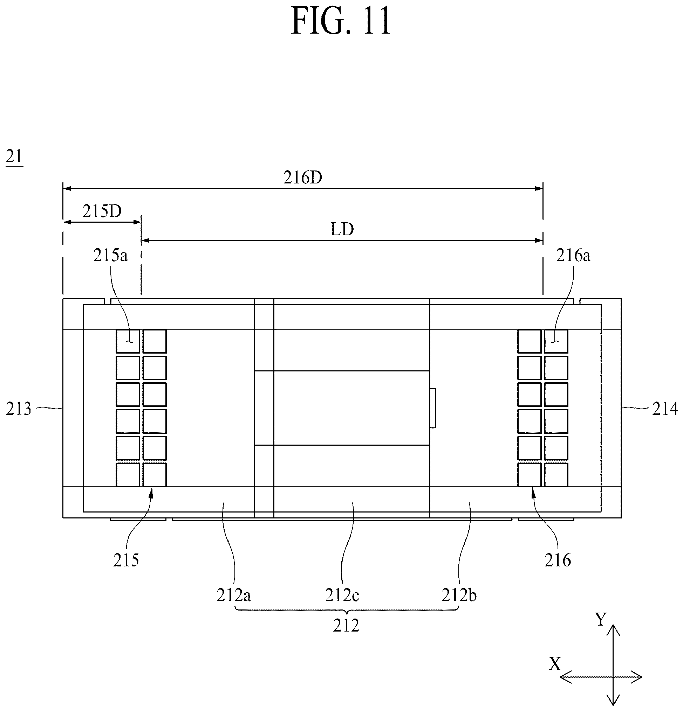

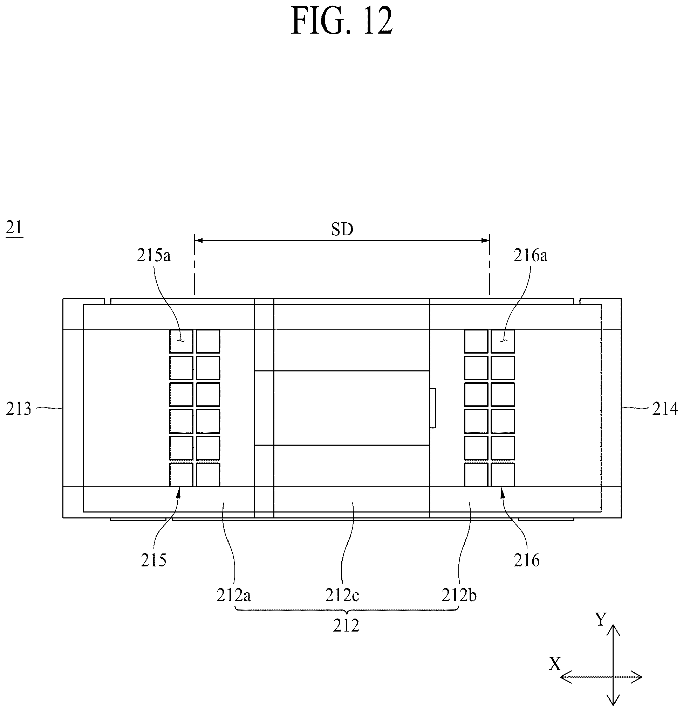

Referring to FIGs. 11 and 12, the cartridge 21 may be implemented so as to have variable humidification performance depending on the distance between the first gas inlet 215 and the first gas outlet 216.

For example, when the distance between the first gas inlet 215 and the first gas outlet 216 shown in FIGs. 5 and 6 is defined as a reference distance CD and when a distance LD between the first gas inlet 215 and the first gas outlet 216 is greater than the reference distance CD, as shown in FIG. 11, the movement distance of wet gas or dry gas until the wet gas or the dry gas is discharged from the inner case 212 through the first gas outlet 216 after the wet gas or the dry gas is introduced into the inner case 212 through the first gas inlet 215 may be increased. As a result, dwell time during which wet gas or dry gas stays in the inner case 212 may be increased, whereby humidification performance of the cartridge 21 may be improved. Consequently, the humidifier 1 for fuel cells according to the present disclosure may be implemented so as to be suitable for a fuel cell used at a place of use that requires high humidification performance.

For example, when a distance SD between the first gas inlet 215 and the first gas outlet 216 is less than the reference distance CD, as shown in FIG. 12, the movement distance of wet gas or dry gas until the wet gas or the dry gas is discharged from the inner case 212 through the first gas outlet 216 after the wet gas or the dry gas is introduced into the inner case 212 through the first gas inlet 215 may be decreased. As a result, dwell time during which wet gas or dry gas stays in the inner case 212 may be decreased, whereby humidification performance of the cartridge 21 may be adjusted so as to be suitable for humidification performance required at a place of use. Consequently, the humidifier 1 for fuel cells according to the present disclosure may be implemented so as to have humidification performance suitable for a fuel cell used at a place of use.

As described above, the cartridge 21 may be implemented so as to have variable humidification performance depending on dwell time of wet gas or dry gas using the distance between the first gas inlet 215 and the first gas outlet 216. Consequently, it is possible to improve versatility, whereby the humidifier 1 according to the present disclosure is applicable to fuel cells used in various places of use. In addition, the humidifier 1 according to the present disclosure may be implemented such that the space between the cartridge 21 and the mid-case 22 is hermetically sealed by the packing members 23 and 23', whereby the cartridge 21 may be easily replaced, and therefore it is possible to improve responsiveness to humidification performance required by the fuel cell through replacement of the cartridge 21.

The distance between the first gas inlet 215 and the first gas outlet 216 is based on the first axis direction (X-axis direction). In this case, the distance between the first gas inlet 215 and the first gas outlet 216 may be the distance between a middle point of the first gas inlet 215 and a middle point of the first gas outlet 216 in the first axis direction (X-axis direction). The middle point of the first gas inlet 215 may mean the point spaced apart from opposite ends of the first gas inlet 215 by the same distance in the first axis direction (X-axis direction). The middle point of the first gas outlet 216 may mean the point spaced apart from opposite ends of the first gas outlet 216 by the same distance in the first axis direction (X-axis direction).

Here, the inner case 212 may include an introduction member 212a, in which the first gas inlet 215 is formed, a discharge member 212b, in which the first gas outlet 216 is formed, and a connection member 212c configured to connect the introduction member 212a and the discharge member 212b to each other. One end of the connection member 212c may be coupled to one end of the introduction member 212a, and the other end of the connection member may be coupled to one end of the discharge member 212b. In this case, based on FIGs. 11 and 12, one end of the introduction member 212a may be a right end, and the other end of the introduction member 212a may be a left end. One end of the discharge member 212b may be a left end, and the other end of the discharge member 212b may be a right end. The introduction member 212a, the discharge member 212b, and the connection member 212c may be integrally formed.

The first gas inlet 215 may be disposed at a position at which the distance from one end of the introduction member 212a and the distance from the other end of the introduction member 212a are different from each other. As a result, the first gas inlet 215 may be disposed biased to any one of the opposite ends of the introduction member 212a in the first axis direction (X-axis direction). As shown in FIG. 11, the first gas inlet 215 may be disposed at a position at which the distance from one end of the introduction member 212a is greater than the distance from the other end of the introduction member 212a. As a result, the distance between the first gas inlet 215 and the first gas outlet 216 of the cartridge 21 may be increased, whereby it is possible to increase dwell time of wet gas or dry gas. As shown in FIG. 12, the first gas inlet 215 may be disposed at a position at which the distance from one end of the introduction member 212a is less than the distance from the other end of the introduction member 212a. As a result, the distance between the first gas inlet 215 and the first gas outlet 216 of the cartridge 21 may be decreased, whereby it is possible to decrease dwell time of wet gas or dry gas.

As the distance between the first gas inlet 215 and one end of the introduction member 212a is lengthened and the distance between the first gas inlet and the other end of the introduction member 212a is shortened, it is possible to increase dwell time of wet gas or dry gas in the cartridge 21. As the distance between the first gas inlet 215 and one end of the introduction member 212a is shortened and the distance between the first gas inlet and the other end of the introduction member 212a is lengthened, it is possible to decrease dwell time of wet gas or dry gas in the cartridge 21.

The first gas outlet 216 may be disposed at a position at which the distance from one end of the discharge member 212b and the distance from the other end of the discharge member 212b are different from each other. As a result, the first gas outlet 216 may be disposed biased to any one of the opposite ends of the discharge member 212b in the first axis direction (X-axis direction). As shown in FIG. 11, the first gas outlet 216 may be disposed at a position at which the distance from one end of the discharge member 212b is greater than the distance from the other end of the discharge member 212b. As a result, the distance between the first gas inlet 215 and the first gas outlet 216 of the cartridge 21 may be increased, whereby it is possible to increase dwell time of wet gas or dry gas. As shown in FIG. 12, the first gas outlet 216 may be disposed at a position at which the distance from one end of the discharge member 212b is less than the distance from the other end of the discharge member 212b. As a result, the distance between the first gas inlet 215 and the first gas outlet 216 of the cartridge 21 may be decreased, whereby it is possible to decrease dwell time of wet gas or dry gas.

As the distance between the first gas outlet 216 and one end of the discharge member 212b is lengthened and the distance between the first gas outlet and the other end of the discharge member 212b is shortened, it is possible to increase dwell time of wet gas or dry gas in the cartridge 21. As the distance between the first gas outlet 216 and one end of the discharge member 212b is shortened and the distance between the first gas inlet and the other end of the discharge member 212b is lengthened, it is possible to decrease dwell time of wet gas or dry gas in the cartridge 21.

In the humidifier 1 for fuel cells according to the present disclosure, as shown in FIG. 11, the first gas inlet 215 may be disposed at a position at which the distance from one end of the introduction member 212a is less than the distance from the other end of the introduction member 212a. In this case, the first gas outlet 216 may be disposed at a position at which the distance from one end of the discharge member 212b is less than the distance from the other end of the discharge member 212b. As a result, the distance LD between the first gas inlet 215 and the first gas outlet 216 may be greater than the reference distance CD.

In the humidifier 1 for fuel cells according to the present disclosure, as shown in FIG. 12, the first gas inlet 215 may be disposed at a position at which the distance from one end of the introduction member 212a is greater than the distance from the other end of the introduction member 212a. In this case, the first gas outlet 216 may be disposed at a position at which the distance from one end of the discharge member 212b is greater than the distance from the other end of the discharge member 212b. As a result, the distance SD between the first gas inlet 215 and the first gas outlet 216 may be less than the reference distance CD.

Here, on the assumption that a first distance 215D (shown in FIG. 11) between the first gas inlet 215 and the other end of the introduction member 212a is L (L being a real number greater than 0), a second distance 216D (shown in FIG. 11) between the first gas outlet 216 and the other end of the introduction member 212a may be greater than 2.33L to 19L. That is, the second distance 216D may be greater than 2.33 times to 19 times the first distance 215D.

In a comparative example in which the second distance 216D is 2.33L or less than the first distance 215D, the distance between the first gas outlet 216 and the first gas inlet 215 may be remarkably shortened, whereby dwell time during which wet gas or dry gas stays in the inner case 212 may be remarkably decreased. In a comparative example in which the second distance 216D is greater than 19 times the first distance 215D, the distance between the first gas outlet 216 and the first gas inlet 215 may be remarkably lengthened, whereby dwell time during which wet gas or dry gas stays in the inner case 212 may be remarkably increased. Unlike this, the embodiment may be implemented such that the second distance 216D is greater than 2.33 times to 19 times the first distance 215D, whereby dwell time during which wet gas or dry gas stays in the inner case 212 may be appropriately adjusted. When the relationship between the first distance and the second distance is expressed as the ratio in distance, the ratio of the first distance 215D to the second distance 216D may be 1:19 to 3:7.

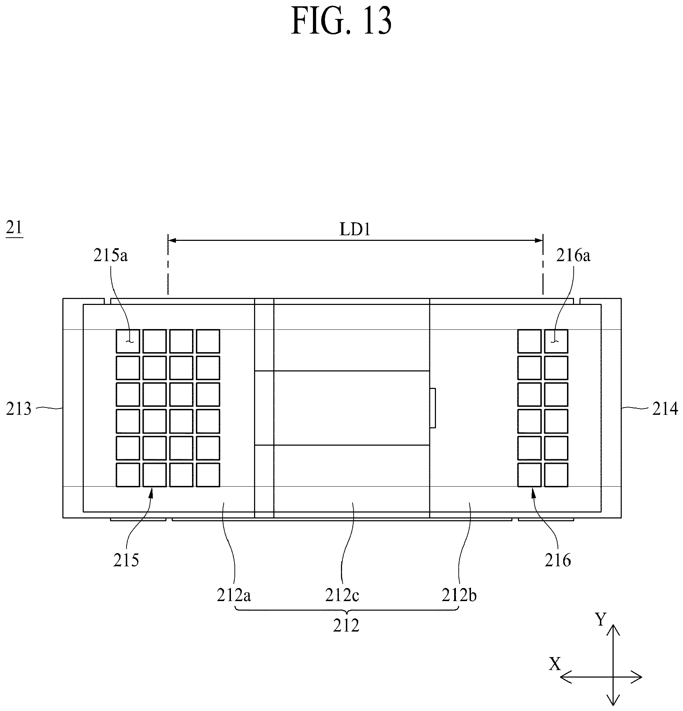

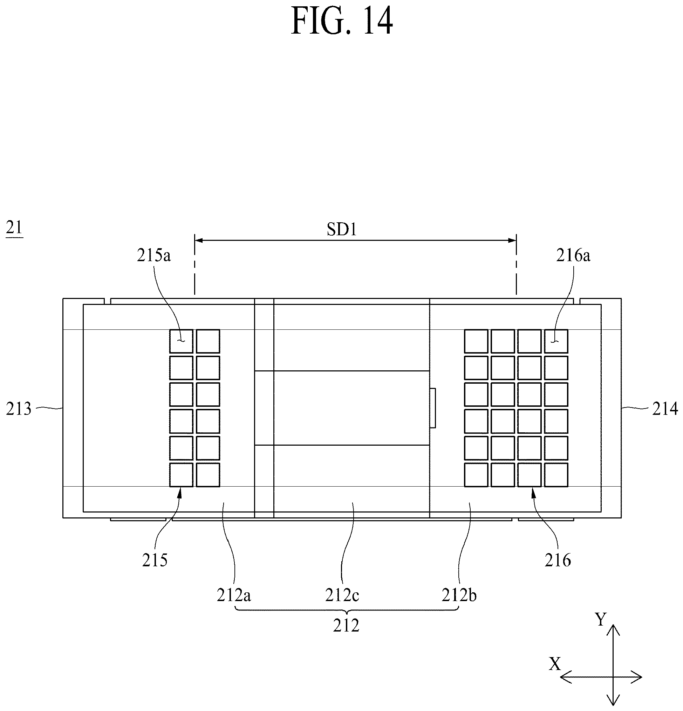

Referring to FIGs. 13 and 14, the cartridge 21 may be implemented so as to have variable humidification performance using both the difference between the inflow area and the outflow area and the distance between the first gas inlet 215 and the first gas outlet 216.

As shown in FIG. 13, the cartridge 21 may be implemented such that the inflow area is greater than the outflow area and such that the first gas inlet 215 and the first gas outlet 216 are spaced apart from each other by a distance LD1 greater than the reference distance CD (shown in FIGs. 5 and 6). In the humidifier 1 according to the present disclosure, therefore, it is possible to increase dwell time of wet gas or dry gas by the difference between the inflow area and the outflow area and additionally to increase dwell time of wet gas or dry gas by increment of the distance LD1 between the first gas inlet 215 and the first gas outlet 216. Consequently, the humidifier 1 according to the present disclosure may be implemented so as to have higher humidification performance. Increment of the distance LD1 between the first gas inlet 215 and the first gas outlet 216 may be implemented as the result of the first gas outlet 216 being disposed at a position at which the distance from one end of the discharge member 212b is greater than the distance from the other end of the discharge member 212b.

As shown in FIG. 14, the cartridge 21 may be implemented such that the outflow area is greater than the inflow area and such that the first gas inlet 215 and the first gas outlet 216 are spaced apart from each other by a distance SD1 less than the reference distance CD (shown in FIGs. 5 and 6). In the humidifier 1 according to the present disclosure, therefore, it is possible to decrease dwell time of wet gas or dry gas by the difference between the inflow area and the outflow area and additionally to decrease dwell time of wet gas or dry gas by decrement of the distance SD1 between the first gas inlet 215 and the first gas outlet 216. Consequently, the humidifier 1 according to the present disclosure may be implemented so as to have humidification performance suitable for a fuel cell used at a place of use. Decrement of the distance SD1 between the first gas inlet 215 and the first gas outlet 216 may be implemented as the result of the first gas inlet 215 being disposed at a position at which the distance from one end of the introduction member 212a is less than the distance from the other end of the introduction member 212a.

The present disclosure described above is not limited to the above embodiments and the accompanying drawings, and it will be obvious to a person having ordinary skill in the art to which the present disclosure pertains that various substitutions, modifications, and alterations are possible without departing from the technical idea of the present disclosure.

## Claims

1. A humidifier for fuel cells, the humidifier comprising:
a humidifying module configured to humidify dry gas supplied from outside using wet gas discharged from a fuel cell stack;
a first cap coupled to one end of the humidifying module; and
a second cap coupled to the other end of the humidifying module, wherein
the humidifying module comprises:
a mid-case open at opposite ends thereof; and
at least one cartridge disposed in the mid-case, the cartridge comprising a plurality of hollow fiber membranes,
the cartridge comprises an inner case having openings formed in ends thereof, the inner case being configured to receive the plurality of hollow fiber membranes,
the inner case comprises a first gas inlet configured to allow gas to be introduced therethrough and a first gas outlet configured to allow gas to be discharged therethrough, and
an area of the first gas inlet and an area of the first gas outlet are different from each other.

2. The humidifier according to claim 1, wherein
each of the first gas inlet and the first gas outlet comprises a plurality of windows formed through the inner case, and
the number of the windows provided in the first gas inlet is greater than the number of the windows provided in the first gas outlet.

3. The humidifier according to claim 1, wherein
each of the first gas inlet and the first gas outlet comprises a plurality of windows formed through the inner case, and
the number of the windows provided in the first gas outlet is greater than the number of the windows provided in the first gas inlet.

4. The humidifier according to claim 2 or 3, wherein
areas of the plurality of windows provided in the first gas inlet are equal to each other, and
areas of the plurality of windows provided in the first gas outlet are equal to each other.

5. The humidifier according to claim 1, wherein, on the assumption that the area of the first gas inlet is N (N being a real number greater than 0), the area of the first gas outlet is 0.5N to less than 1N or greater than 1N to 2N.

6. The humidifier according to claim 1 or 5, wherein
the first gas inlet and the first gas outlet are formed at one side of the inner case, and
on the assumption that an area of the one side of the inner case is M (M being a real number greater than 0), the area of the first gas inlet is 0.05M to 0.18M.

7. The humidifier according to claim 1 or 5, wherein
the first gas inlet and the first gas outlet are formed at one side of the inner case, and
on the assumption that an area of the one side of the inner case is M (M being a real number greater than 0), the area of the first gas outlet is 0.05M to 0.18M.

8. The humidifier according to claim 1, wherein
the inner case comprises:
an introduction member in which the first gas inlet is formed;
a discharge member in which the first gas outlet is formed; and
a connection member disposed between the introduction member and the discharge member,
one end of the connection member is coupled to one end of the introduction member while the other end of the connection member is coupled to one end of the discharge member,
the first gas inlet is disposed at a position at which a distance from one end of the introduction member and a distance from the other end of the introduction member are different from each other, and
the first gas outlet is disposed at a position at which a distance from one end of the discharge member and a distance from the other end of the introduction member are different from each other.

9. A humidifier for fuel cells, the humidifier comprising:
a humidifying module configured to humidify dry gas supplied from outside using wet gas discharged from a fuel cell stack;
a first cap coupled to one end of the humidifying module; and
a second cap coupled to the other end of the humidifying module, wherein
the humidifying module comprises:
a mid-case open at opposite ends thereof; and
at least one cartridge disposed in the mid-case, the cartridge comprising a plurality of hollow fiber membranes,
the cartridge comprises an inner case having openings formed in ends thereof, the inner case being configured to receive the plurality of hollow fiber membranes,
the inner case comprises:
a first gas inlet configured to allow gas to be introduced therethrough;
a first gas outlet configured to allow gas to be discharged therethrough;
an introduction member in which the first gas inlet is formed;
a discharge member in which the first gas outlet is formed; and
a connection member disposed between the introduction member and the discharge member,
one end of the connection member is coupled to one end of the introduction member while the other end of the connection member is coupled to one end of the discharge member,
the first gas inlet is disposed at a position at which a distance from one end of the introduction member and a distance from the other end of the introduction member are different from each other, and
the first gas outlet is disposed at a position at which a distance from one end of the discharge member and a distance from the other end of the introduction member are different from each other.

10. The humidifier according to claim 8 or 9, wherein, on the assumption that a first distance between the first gas inlet and the other end of the introduction member is L (L being a real number greater than 0), a second distance between the first gas outlet and the other end of the introduction member is greater than 2.33L to 19L.

11. The humidifier according to claim 8 or 9, wherein
the first gas inlet is disposed at a position at which the distance from the one end of the introduction member is less than the distance from the other end of the introduction member, and
the first gas outlet is disposed at a position at which the distance from the one end of the discharge member is less than the distance from the other end of the discharge member.

12. The humidifier according to claim 8 or 9, wherein
the first gas inlet is disposed at a position at which the distance from the one end of the introduction member is greater than the distance from the other end of the introduction member, and
the first gas outlet is disposed at a position at which the distance from the one end of the discharge member is greater than the distance from the other end of the discharge member.

13. A cartridge of a humidifier for fuel cells configured to humidify dry gas supplied from outside using wet gas discharged from a fuel cell stack, the cartridge comprising:
an inner case having openings formed in ends thereof, the inner case being configured to receive a plurality of hollow fiber membranes; and
a first gas inlet and a first gas outlet formed in the inner case, wherein
an area of the first gas inlet and an area of the first gas outlet are different from each other.

14. The cartridge according to claim 13, wherein, on the assumption that the area of the first gas inlet is N (N being a real number greater than 0), the area of the first gas outlet is 0.5N to less than 1N or greater than 1N to 2N.

15. The cartridge according to claim 13 or 14, wherein
the first gas inlet and the first gas outlet are formed at one side of the inner case, and
on the assumption that an area of the one side of the inner case is M (M being a real number greater than 0), the area of the first gas inlet is 0.05M to 0.18M.

16. The cartridge according to claim 13 or 14, wherein
the first gas inlet and the first gas outlet are formed at one side of the inner case, and
on the assumption that an area of the one side of the inner case is M (M being a real number greater than 0), the area of the first gas outlet is 0.05M to 0.18M.

17. The cartridge according to claim 13, wherein
the inner case comprises:
an introduction member in which the first gas inlet is formed;
a discharge member in which the first gas outlet is formed; and
a connection member coupled to each of the introduction member and the discharge member,
one end of the connection member is coupled to one end of the introduction member while the other end of the connection member is coupled to one end of the discharge member,
the first gas inlet is disposed at a position at which a distance from one end of the introduction member and a distance from the other end of the introduction member are different from each other, and
the first gas outlet is disposed at a position at which a distance from one end of the discharge member and a distance from the other end of the discharge member are different from each other.

18. A cartridge of a humidifier for fuel cells configured to humidify dry gas supplied from outside using wet gas discharged from a fuel cell stack, the cartridge comprising:
an inner case having openings formed in ends thereof, the inner case being configured to receive a plurality of hollow fiber membranes; and
a first gas inlet and a first gas outlet formed in the inner case, wherein
the inner case comprises:
an introduction member in which the first gas inlet is formed;
a discharge member in which the first gas outlet is formed; and
a connection member coupled to each of the introduction member and the discharge member,
one end of the connection member is coupled to one end of the introduction member while the other end of the connection member is coupled to one end of the discharge member,
the first gas inlet is disposed at a position at which a distance from one end of the introduction member and a distance from the other end of the introduction member are different from each other, and
the first gas outlet is disposed at a position at which a distance from one end of the discharge member and a distance from the other end of the discharge member are different from each other.

19. The cartridge according to claim 17 or 18, wherein, on the assumption that a first distance between the first gas inlet and the other end of the introduction member is L (L being a real number greater than 0), a second distance between the first gas outlet and the other end of the introduction member is greater than 2.33L to 19L.

20. The cartridge according to claim 17 or 18, wherein
the first gas inlet is disposed at a position at which the distance from the one end of the introduction member is less than the distance from the other end of the introduction member, and
the first gas outlet is disposed at a position at which the distance from the one end of the discharge member is less than the distance from the other end of the discharge member.

21. The cartridge according to claim 17 or 18, wherein
the first gas inlet is disposed at a position at which the distance from the one end of the introduction member is greater than the distance from the other end of the introduction member, and
the first gas outlet is disposed at a position at which the distance from the one end of the discharge member is greater than the distance from the other end of the discharge member.
